# EUROPEAN PATENT SPECIFICATION

(11) **EP 2 294 677 B1**
(45) Date of publication and mention of the grant of the patent: **22.02.2012**
(21) Application number: 09772299.5
(22) Date of filing: 12.06.2009
(51) Int. Cl.: H02K 5/22

(54) **POWER-SUPPLY DEVICE FOR THE TUBULAR GEARMOTOR OF A DRIVE SYSTEM**
STROMVERSORGUNGSGERÄT FÜR DEN RÖHRENFÖRMIGEN GETRIEBEMOTOR EINES ANTRIEBSSYSTEMS
DISPOSITIF D' ALIMENTATION ÉLECTRIQUE POUR LE MOTEUR À ENGRENAGES TUBULAIRE D' UN SYSTÈME D' ENTRAÎNEMENT

(30) Priority: 30.06.2008 IT PN20080054
(43) Date of publication of application: 16.03.2011
(73) Proprietor: Nice Spa, 31046 Oderzo (TV) (IT)
(72) Inventor: MALAUSA, Andrea, I-31047 Ponte Di Piave (Treviso) (IT); GALBERTI, Lorenzo, I-30024 Musile Di Piave (Venezia) (IT)
(74) Representative: Citron, Massimiliano
(86) International application number: PCT/EP2009/057308
(87) International publication number: WO 2010/000599

(56) References cited:
- EP-A1- 0 320 416
- EP-A1- 0 479 719
- EP-A1- 1 659 673
- DE-U1- 29 612 971

## Description

The present invention relates to a power-supply device for energizing the tubular motor reducer, or gearmotor, of a drive system for roll-up shutters, roller blinds, and the like, as typically used in connection with windows and doors.

Home automation, as well as industrial automation, includes applications enabling blinds, shutters and similar door and window covers to be driven and handled without any effort with the help of a tubular motor reducer, or gearmotor, which is fitted into and connected inside the roller on which the shutter, blind or the like is due to roll up.

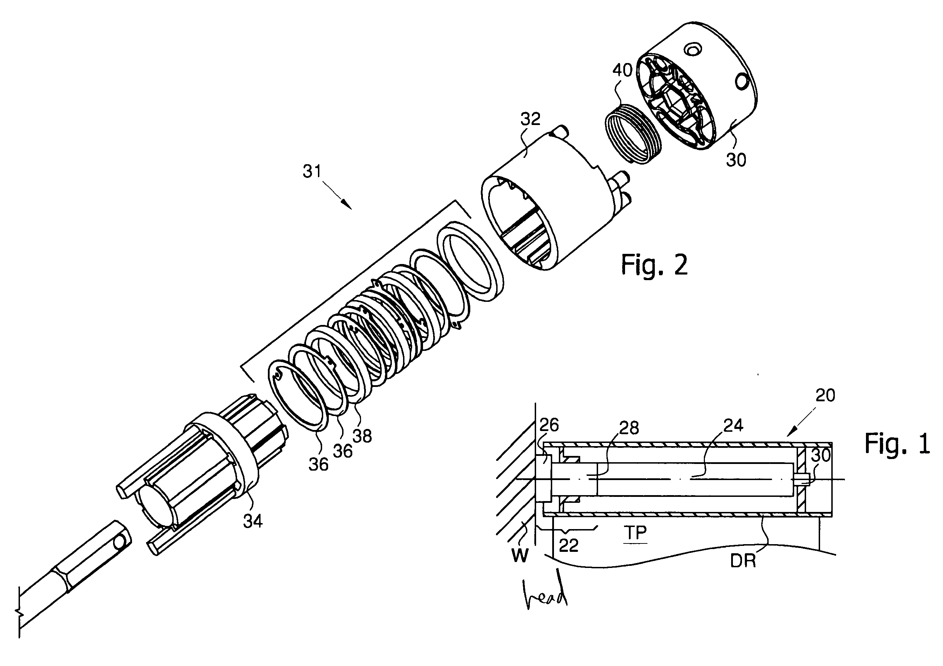

A gearmotor 20 of the above-noted kind is made up (cf. Figure 1 and, for instance, also W02006045724) by having a head 22, which contains appropriate control devices (of either a mechanical or an electronic kind), duly joined with a tubular body 24 firmly connected/secured thereto, said tubular body containing the electric drive motor and a mechanical speed-reducer, or speed-reducing gears. At an end portion thereof, the head 22 features a base 26 for attachment - either directly or via an appropriate support (not shown) interposed therebetween - to the building wall W; at the opposite end portion thereof, it is provided with a cylindrical body 28, onto which the tubular body 24 is fitted. At the opposite end portion of the tubular body 24 there is protruding the output shaft 30 of the drive motor, which is connected, via an appropriate adapter, to a roller DR, on which a shutter or blind TP is able to roll up.

For a drive system of the above-noted kind to be able to operate correctly, a pre-condition is the possibility for the gearmotor to be operable even under power failure or system failure conditions.

To cope with circumstances of this kind, use is therefore made of a turning rod adapted to be inserted in the base 26, wherein such base contains a purpose-fit device. In other words, when this rod is turned, either manually or with the help of a screwer as commonly used in the art, this causes the cylindrical body 28, the tubular body 24, the output shaft 30 of the motor, the adapter and, as a result, even the roller DR to rotate relative to the base 26, whereas the body 28 and the tubular body 24 keep motionless on the base 26, i.e. relative to the latter, under regular operating conditions, i.e. when movement is regularly generated by the electric drive motor.

The above-described operation is generally and technically termed as "override or fast-help manoeuvre" in the art.

Since the motor is energized via the cylindrical body 28, it can be most readily appreciated that the related electrical connections shall necessarily be ensured, i.e. remain intact and working, even during and after any rotation of the cylindrical body 28 relative to the base 26, so that sliding-contact modules are generally used to this purpose (prior art illustrated in Figure 2, reference numeral 31). These sliding or wiping contacts are comprised of pairs of metal rings 36 that are able to rotate by sliding upon, i.e. relative to each other, each such pair of metal rings being in turn spaced from each other by insulating rings 38 interposed therebetween. Illustrated in the drawing there are four pairs of sliding contacts for three phases and grounding. The contact rings 36 and the insulating rings 38 are piled into a stack and packed into a casing, which is formed by assembling a container 32, a base 30 and a support 34 altogether. The contact rings 36 and the insulating rings 38 lie onto the support 34 and abut against an inner edge or rim of the container 32. Provided on the base 30 there is a spring 40, which pushes said contact rings 36 and insulating rings 38 against the support 34 when it fits into the container 32. When the module is mounted, the contacts 36 and the insulating rings 38 are pressed upon each other.

In this connection, it should be noticed that the action of the spring 40 is absolutely necessary in view of always and constantly ensuring a correct contact between the pairs of contacts 36, so as to prevent unsteady or false contact situations and malfunctions from possibly arising or occurring.

In consideration of the fact that market requirements in general call for constructions to be simplified (in terms of reduction in the number of parts) to as far as possible an extent and, above all, axial dimensions to be in turn made as small as possible, the problem arises of finding solutions enabling the state of the art to be modified and improved accordingly. For example, the spring 40 in the module 31 can be noticed to have a longitudinal dimension that is really appreciable, and is further such as to require quite complex, i.e. awkward and expensive assembly steps (it must in fact be pressed and kept in such state throughout the assembly of all other component parts).

EP0320416 discloses a rotary collector formed by sliding contacts able to conduct current. The contacts are arranged on a frustoconical, stepped pin and stand two by two in contact with each other. Elastic means are provided to bias the conductive rings against one another, i.e. some flaps integral with a ring

It is therefore a main object of the present invention to provide a power-supply device for energizing a tubular motor of the above-described kind, which is easier to assemble and less expensive to manufacture.

According to the present invention, such aim is reached in a power-supply device for energizing a tubular motor reducer, or gearmotor, of a drive system for roll-up shutters, roller blinds, and the like, as typically used in connection with windows and doors, comprising the features defined in Claim 1.

Integrating said elastically flexible member directly in the body of the containment casing of the stack allows a spring 40 to become unnecessary and, therefore, to be done away with, thereby reducing both part count and costs.

The invention as described above may be embodied in a number of different manners, so as to include, either individually or in any combination thereof, a variety of preferred features, according to which
- the casing may be comprised of two pieces, and may comprise snap-fitting means for securing such pieces firmly together;
- the sliding contacts and the insulating members are in a shape of rings and said casing comprises a first hollow cylindrical piece and a second piece being shaped complementarily thereto, so as to be able to be fitted into said first piece, and having a cylindrical portion onto which the stack of contact and insulating members is able to be fitted, and on the base of which, i.e. where the stack is resting on, there are provided one or several flexible tongues;
- the snap-fitting means may be comprised of one or several teeth, or the like, provided on one of said pieces and adapted to engage the edge, or rim, of the other piece;

Features and advantages of the present invention will anyway be more readily understood from the description of a preferred embodiment that is given below by way of non-limiting example with reference to the accompanying drawings, in which:
- Figure 1 is a schematic cross-sectional view of a tubular motor reducer according to the prior art;
- Figure 2 is an exploded view of a power-supply device for energizing a tubular motor according to the prior art;
- Figure 3 is an exploded view of an device according to the present invention;
- Figure 4 is a front view of a component part of the device of Figure 3;
- Figure 5 is a perspective view of an assembled part of the device of Figure 3;
- Figure 6 is an enlarged cross-sectional view along the plane VI-VI in Figure 4;
- Figure 7 is an enlarged view of a detail of the illustration in Figure 6, where it is shown circled in a dashed line.

A device 60 according to the present invention comprises wiping or sliding contacts in the form of pairs of metal rings 66, which are capable of rotating by sliding upon each other, and which are provided in an alternating arrangement with insulating rings 68 (only a few of them shown in the Figures). Illustrated in the drawing there are contacts for three phases and grounding.

The contacts 66 and the insulating rings 68 are enclosed in a casing formed of a cylindrical shell 80 and a cylindrical support 70.

The cylindrical support 70 is comprised of a stud 72 that extends from a cylindrical base 74 having a larger cross-section. Between these two items there remains a radial step 71.

The cylindrical shell 80 has an inner cavity 82, which is solely open on one side thereof, and which has such shape and depth as to be substantially complementary to the support 70, so as to contain it.

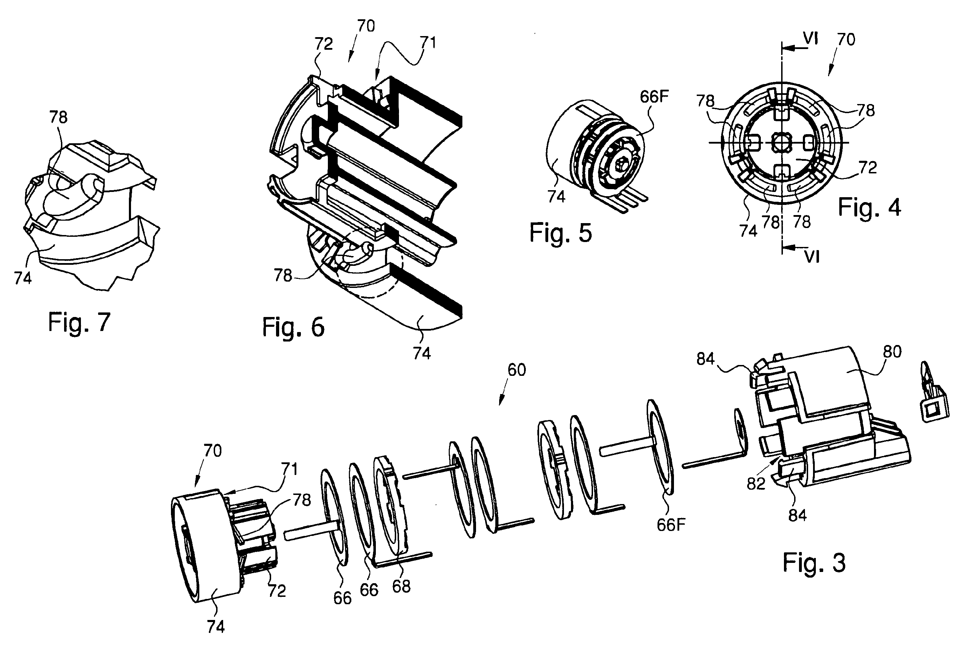

At the foot of the stud 72, on the surface of the step 71 there are provided six flexible segments 78 in a radially symmetrical arrangement round the stud 72 and formed integrally with the base 74 (this can be done in a most simple and cost-effective manner if the part is made of injection-moulded plastics). The flexible segments 78 (see Figures 6 and 7) are slightly raised above and inclined relative to the surface of the step 71, with the free ends thereof facing each other in a two-by-two pattern.

The contacts 66 and the insulating members 68 are in the shape of rings and are stacked upon each other on the stud 72 (see Figures 3 and 5). As a result, the thus formed stack comes to rest upon the free ends of the segments 78 so as to be elastically supported thereon.

The edge of the cylindrical shell 80 that delimits the aperture of the cavity 82 comprises six small teeth or hooks 84 bending inwards in a hook-like manner towards the centre.

When the device is assembled, the contacts 66 and the insulating members 68 are stacked on the stud 72; then the support 70 is fitted into the cavity 82 .The passage of the base 74 therethrough causes the teeth or hooks 84 to shift apart radially.

When the contact on top of the stack (as indicated at 66F) moves into abutting against the bottom of the cavity 82, it takes a slight pressure for the support 70 to keep being fitted thereinto. Such pressure overcomes the elastic reaction of the hooked teeth 84, which bend slightly outwards, and the elastic segments 78, which bend downwards, i.e. tend to flatten. Once the support is completely fitted in, the hooked teeth 84 reach out to the distal edge of the base 74 to then snap inwards towards the centre thereof, thereby retaining the support 70 inside the cavity 82 along such edge. As assembled, the whole device is very compact and the elastic segments 78 press the stack of contacts 66 against each other, thereby ensuring effective electric contact conditions under any operating and use condition of the device.

## Claims

1. Power-supply device (60) for energizing a tubular motor reducer, or gearmotor, of a drive system (20) for roll-up shutters (TP), roller blinds, and the like, as typically used in connection with windows and doors, comprising:
- sliding contacts (66) in the form of rotating rings provided in an alternating arrangement with insulating rings (68), all of them stacked upon each other,
- a casing (70, 80) for containing the stack of alternating sliding contacts and insulating members,
**characterized in that**
the body of said containment casing (70, 80) comprises at least one elastically flexible member (78) integrally therewith, said at least one elastically flexible member being adapted to be in a compressed state when the device is assembled and, as a result, to exert an elastic reaction onto the stack so as to keep all component parts thereof constantly packed together and in tight contact with each other.

2. Power-supply device (60) according to claim 1, wherein said elastically flexible member is comprised of one or several segments (78).

3. Power-supply device (60) according to claim 1, wherein said casing is comprised of two pieces (70, 80), and further comprises snap-fitting means (84) for securing such pieces firmly together.

4. Power supply device (60) according to claim 3, wherein the contacts (66) and the insulating members (68) are enclosed in the casing.

5. Power-supply device (60) according to claim 3, wherein the sliding contacts and the insulating members are in a shape of rings and said casing comprises a first hollow cylindrical piece (80) and a second piece (70) being shaped complementarily thereto, so as to be able to be fitted into the hollow space of said first piece, and having a cylindrical portion (72) onto which the stack of contact and insulating members is able to be fitted, and on the base (71) of which, i.e. where the stack is resting on, there are provided one or several flexible members in the form of flexible tongues (78).

6. Power-supply device (60) according to claim 3, wherein said snap-fitting means are comprised of one or several teeth (84), or the like, provided on one of said pieces (70, 80) and adapted to engage the rim of the other piece.

## Patentansprüche

1. Speisevorrichtung (60) zur elektrischen Versorgung eines röhrenförmigen Getriebemotors eines Antriebs (20) für die Betätigung von Rollos Verdunkelungsrollos usw. (TP), die normalerweise für Türen und Fenster verwendet wird, mit:
- Schleifkontakten (66) mit der Form von rotierenden und mit Dämmringen (68) gestaffelten Ringen, die alle übereinander gestapelt sind;
- einem Gehäusekörper (70, 80) zur Aufnahme des mit Dämmringen gestaffelten Schleifkontaktstapels;
**dadurch gekennzeichnet, dass**
der Gehäusekörper (70, 80) zumindest ein elastisch biegsames Element (78) vollständig umfasst, das komprimiert wird, wenn die Vorrichtung zusammengebaut ist und demzufolge eine elastische Reaktion auf den Stapel ausübt, um die Komponenten ständig kompakt und miteinander in engem Kontakt zu halten.

2. Vorrichtung (60) nach Anspruch 1, **dadurch gekennzeichnet, dass** das biegsame Element aus einem oder mehreren Segmenten (78) besteht.

3. Vorrichtung (60) nach Anspruch 1, **dadurch gekennzeichnet, dass** dieses Gehäuse aus zwei Teilen (70, 80) und Rastelementen (84) besteht, um diese Teile zu befestigen.

4. Vorrichtung (60) nach Anspruch 3, **dadurch gekennzeichnet, dass** sich die Schleifkontakte (66) und die Dämmringe (68) im Gehäuse befinden.

5. Vorrichtung (60) nach Anspruch 3, **dadurch gekennzeichnet, dass** die Schleifkontakte und Dämmringe (68) eine ringförmige Form haben und dass dieses Gehäuse einen ersten zylindrischen, hohlen Teil (80) und einen zweiten Teil (70) umfasst, wobei der zweite Teil eine Form hat, die sich in den hohlen Raum des ersten Teils einfügt und einen zylindrischen Abschnitt (72) aufweist, um den der Kontakt-Dämmring-Stapel eingeführt werden kann und an dessen Basis (71), d.h. wo der Stapel aufliegt, ein oder mehrere flexible Elemente in Form von biegsamen Federn (78) vorhanden sind.

6. Vorrichtung (60) nach Anspruch 3, **dadurch gekennzeichnet, dass** die genannten Rastelemente auf einem dieser Teile (70, 80) eine oder mehrere Verzahnungen (84) haben, welche am Rand des anderen eingreifen.

## Revendications

1. Un dispositif d'alimentation (60) pour alimenter un motoréducteur tubulaire d'un actionnement (20) en mesure de mettre en mouvement des volets, des stores et autres systèmes semblables (TP) traditionnellement utilisé sur les portes ou fenêtres, comprenant
- des contacts glissants (66) sous la forme de bagues rotatives qui alternent avec des bagues isolantes (68), empilées les unes sur les autres,
- une enveloppe d'enceinte (70, 80) contenant la pile de contacts glissants et de bagues isolantes en alternance,
**caractérisé en ce que**
le corps de l'enveloppe (70, 80) comprend intégralement au minimum un élément élastiquement flexible (78), en mesure d'être comprimé quand le dispositif est assemblé, et qui, par conséquent, exerce une réaction élastique sur la pile pour maintenir les composants constamment comprimés et en étroit contact réciproque.

2. Un dispositif (60) selon la revendication 1, dans lequel ledit élément flexible comprend un ou plusieurs segments (78).

3. Un dispositif (60) selon la revendication 1, dans lequel ladite enveloppe comprend deux pièces (70, 80) et des éléments à déclenchement (84) pour serrer lesdites pièces ensembles.

4. Un dispositif (60) selon la revendication 3, dont les contacts (66) glissants et les bagues isolantes (68) sont enfermés dans l'enveloppe.

5. Un dispositif (60) selon la revendication 3, dont les contacts glissants et les bagues isolantes (68) ont une forme annulaire et dont ladite enveloppe comprend une première pièce cylindrique creuse (80) et une seconde pièce (70) ayant une forme complémentaire afin d'être introduite dans l'espace creux de la première. Cette seconde pièce a une partie cylindrique (72) autour de laquelle on peut enfiler la pile de contacts et d'isolants annulaires, et à la base (71) de laquelle, c'est-à-dire là où repose la pile, se trouvent un ou plusieurs éléments flexibles en forme de languettes flexibles (78).

6. Un dispositif (60) selon la revendication 3, où lesdits éléments à déclenchement comprennent, sur l'une desdites pièces (70, 80), une ou plusieurs dents (84) en mesure de s'engrener sur le bord de l'autre.
